Europäisches Patentamt

European Patent Office

Office européen des brevets

(11) Veröffentlichungsnummer: **0 264 699**
**A2**

(12) # EUROPÄISCHE PATENTANMELDUNG

(21) Anmeldenummer: **87114472.1**

(22) Anmeldetag: **03.10.87**

(51) Int. Cl.⁴: **G11B 5/72**

(30) Priorität: **18.10.86 DE 3635524**

(43) Veröffentlichungstag der Anmeldung:
**27.04.88 Patentblatt 88/17**

(84) Benannte Vertragsstaaten:
**DE FR GB IT NL**

(71) Anmelder: **Leybold Aktiengesellschaft**
**Bonner Strasse 498**
**D-5000 Köln 51(DE)**

(72) Erfinder: **Kieser, Jörg, Dr.**
**Goldbergstrasse 4a**
**D-8755 Albstadt(DE)**
Erfinder: **Geisler, Michael, Dr.**
**Chatillonerstrasse 29**
**D-6480 Wächtersbach(DE)**

(74) Vertreter: **Zapfe, Hans, Dipl.-Ing.**
**Seestrasse 2 Postfach 30 04 08**
**D-6054 Rodgau-3(DE)**

(54) Verfahren zum Herstellen von Schutzschichten auf magnetischen Datenträgern und durch das Verfahren hergestellter Datenträger.

(57) Verfahren zum Herstellen von Schutzschichten auf magnetischen Datenträger durch Plasmapolymerisation. In einem Frequenzbereich von 915 MHz bis 10 GHz werden Kohlenstoff enthaltende Schichten aus zugeführten flüchtigen Kohlenwasserstoffen und Fluor-Kohlenstoff-Verbindungen abgeschieden. Zur Lösung der Aufgabe, mechanisch und chemisch widerstandsfähige Schichten zu erzeugen, wird zunächst eine Haftvermittler-und Korrosionschutzschicht aus einem Polymerisat aus der Gruppe der fluorierten Kohlenstoffe und Kohlenwasserstoffe mit einer Schichtdicke von 1 bis 20 nm aufgebracht und anschließend auf die Haftvermittlerschicht durch ein eine Blasspannung erzeugendes Plasma-Polymerisa-tionsverfahren eine Schicht aus amorphem Kohlenstoff mit einer Schichtdicke von 15 bis 100 nm aufgebracht.

FIG. 2

EP 0 264 699 A2

## " Verfahren zum Herstellen von Schutzschichten auf magnetischen Datenträgern und durch das Verfahren hergestellter Datenträger "

Die Erfindung bezieht sich auf ein Verfahren zum Herstellen von Schutzschichten auf magnetischen Datenträgern durch Plasmapolymerisation in einem Frequenzbereich von 915 MHz bis 10 GHz und Abscheiden von Kohlenstoff enthaltenden Schichten aus zugeführten flüchtigen Kohlenwasserstoffen und Fluor-Kohlenstoff-Verbindungen.

Derartige Datenträger, bei denen es sich bevorzugt um Magnetbänder handelt, bei denen der Informationsträger aus einer aufgedampften Metallschicht besteht (ME-Band), weiterhin um Hard-und Floppy-Disks, sind einem mechanischen Verschleiß ausgesetzt, der durch einen mindestens zeitweiligen Kontakt der Aufnahme-/Leseköpfe mit dem Datenträger verursacht wird. Bei der Hard-Disk tritt ein mechanischer Kontakt zu den Aufnahme-/Leseköpfen nur während der Start-Stop-Phasen auf.

Es ist daher bekannt, den eigentlichen (metallischen) Informationsträger durch eine Schutzschicht aus amorphem Kohlenstoff zu schützen. Problematisch ist hierbei allerdings die Haftung der amorphen Kohlenstoffschicht auf dem Datenträger. Aber selbst wenn es gelingt, eine einwandfreie mechanische Haftung zu erzielen, dann ist damit noch nicht ein weiteres Problem beseitigt, nämlich das der Korrosion durch Umgebungsbedingungen.

Der Forderung nach einem ausreichenden mechanischen und chemischen Schutz steht die Forderung nach einer hohen Speicherdichte diametral entgegen. Unter heutigen Gesichtspunkten wird eine Speicherdichte von etwa $10^8$ Bit/cm$^2$ angestrebt, was wiederum sehr dünne Schutzschichten voraussetzt, deren Dicke maximal etwa 100 nm beträgt.

Es hat sich in der Vergangenheit gezeigt, daß die magnetischen Eigenschaften der Informationsträger durch den Einbau von Sauerstoff innerhalb kurzer Zeit speziell bei hohen Temperaturen und Luftfeuchtigkeiten so geändert werden, daß die Datenträger unbrauchbar werden.

Durch die DE-OS 35 39 724 ist ein Verfahren der eingangs beschriebenen Gattung bekannt, bei dem innerhalb einer einzigen Schutzschicht ein Teil des Wasserstoffs durch Fluor substituiert werden kann, so daß das Atomverhältnis von Kohlenstoff zu Wasserstoff 2 bis 8 und das Atomverhältnis von Fluor zu Wasserstoff 1,3 bis 3,0 betragen kann. Zwar wird dadurch die Korrosionsbeständigkeit gesteigert und die Laufeigenschaften und die Festigkeit werden verbessert, jedoch ist die Härte der Schicht nicht mit derjenigen von amorphen Kohlenstoff vergleichbar. Bei amorphem Kohlenstoff liegt das genannte Verhältnis von C zu H über 10.

Die relative Weichheit der durch das bekannte Verfahren hergestellten einfachen Polymerisatschicht ist auf das Herstellverfahren bzw. die dafür benutzte Vorrichtung zurückzuführen: Der zu beschichtende bandförmige Datenträger wird zwischen zwei plattenförmigen Elektroden hindurchgeführt, von denen die eine an Masse und die andere an eine Stromversorgung gelegt ist, die Hochfrequenz, Mikrowellen, Wechselstrom oder Gleichstrom erzeugen kann. Aufgrund der gewählten Anordnung unterbleibt jedoch die Ausbildung einer Beschleunigungsspannung am Substrat, nämlich am Datenträger.

Die dargestellte Anordnung ist in keinem Falle geeignet, mit Mikrowellen betrieben zu werden. Eine Beschleunigungsspannung am Substrat kann sich allenfalls bis zu einem Betrag von ca. 2 bis 4 Volt aufbauen. Der Grund hierfür ist der, daß diese Spannung generell nur mit Hilfe von Hichfrequenzanregung und Positionierung des Substrats unmittelbar auf der Katode erzeugt werden kann.

Der Erfindung liegt daher die Aufgabe zugrunde, ein Verfahren der eingangs beschriebenen Gattung anzugeben, mit dem Datenträger erzeugt werden können, die sowohl mechanischen als auch chemischen Angriffen über lange Zeit widerstehen können.

Die Lösung der gestellten Aufgabe erfolgt bei dem eingangs ängegebenen Verfahren erfindungsgemäß dadurch, daß man

a) zunächst eine Haftvermittler-und Korrosionsschutzschicht aus einem Polymerisat aus der Gruppe der fluorierten Kohlenstoffe und Kohlenwasserstoffe mit einer Schichtdicke von 1 bis 20 nm aufbringt und

b) auf die Haftvermittlerschicht durch ein eine Biasspannung erzeugendes Plasma-Polymersiationsverfahren eine Schicht aus amorphem Kohlenstoff mit einer Schichtdicke von 15 bis 100 nm aufbringt.

Durch das erfindungsgemäße Verfahren wird die gestellte Aufgabe in vollem Umfange gelöst.

Beim Erfindungsgegenstand stellt sich eine merklich höhere Spannung ein, die auch als "Self-Bias-Spannung" bezeichnet wird und die Ursache für harte Schichten bis hin zum amorphen Kohlenstoff ist. Auch ist ganz offensichtlich mit dem bekannten Verfahren nur ein Kontaktwinkel mit Wasser von 60° im Minumum erreichbar, während beim Erfindungsgegenstand nur ein Kontaktwinkel von maximal 45° erreicht wird, was auf erhebliche Unterschiede in der Schichtstruktur schließen läßt.

Die Bias-Spannung in Richtung auf das Substrat führt zu einem Bombardement mit positiven Ionen, das letztendlich eine hohe Schichthärt zur Folge hat. Eine solche Bias-Spannung kann dadurch erzeugt werden, daß man das Substrat unter unmittelbarere Berührung über eine Elektrode führt oder auf einer Elektrode hält, die mit Hochfrequenz versorgt wird, so daß sie gegenüber der anderen, größeren, Elektrode auf Katodenpotential liegt.

Eine andere, sehr gut für die Ausbildung einer hinreichenden Bias-Spannung geeignete Vorrichtung ist in der DE-OS 33 16 693 beschrieben, und zwar im Zusammenhang mit der Herstellung von amorphen Kohlenstoffschichten auf Haftvermittlern, die durch Polymerisation aus Gasen aus der Gruppe der Siloxane und Silazane gebildet worden sind. Die dort angegebenen Mikrowellen-Leiterstrukturen bestehen aus je zwei geraden Holmen, die parallel zueinander verlaufen und zwischen denen sich gleich lange Sprossen erstrecken, die mit den Holmen in metallischer Verbindung stehen. Die Sprossen sind abwechselnd mit einem von zwei Mittelleitern elektrisch leitend verbunden, wie dies in der US-PS 3 814 983 ausführlich dargestellt ist. Die von einer solchen Wellenleiterstruktur erzeugten Mikrowellen werden über Fenster aus einem mikrowellendurchlässigen Werkstoff wie Quarzglas oder Aluminiumoxidkeramik, Polytetrafluoräthylen etc. in eine Reaktionskammer eingelassen, ·in der der eigentliche Plasmaprozeß stattfindet. Die Wellenleiterstrukturen stehen ihrerseits über je einen Hohlleiter mit einem Mikrowellensender in Verbindung. Es hat sich jedenfalls gezeigt, daß sich durch eine solche Energiequelle ein Self-Bias auf der Oberfläche der zu beschichteten Substrate ausbildet, das zu den gewünschten, außerordentlich harten Schichten führt.

Unter einer "eine Bias-Spannung erzeugenden Plasma-Polymerisation" wird ein Verfahren verstanden, bei dem eine negative Self-Biasspannung von betragsmässig mindestens 10 Volt auf der dem Plasma ausgesetzten Substratoberfläche entsteht. Bezogen auf ein Verfahren, das in einer Vorrichtung nach der DE-OS 33 16 693 ausgeübt wird, ist dabei eine spezifische Mikrowellenleistung von mindestens 1,8 kW pro laufenden Meter der Leiterstruktur in die Reaktionskammer einzubringen und hierbei die zu beschichtende Substratoberfläche in einem Abstand zwischen 20 und 100 mm von der inneren Fensteroberfläche zu halten, um die genannte negative Mindestspannung von betragsmässig 10 Volt nicht zu unterschreiten.

Das erfindungsgemäße Verfahren hat zusätzlich den Vorteil außerordentlich hoher Abscheidungsraten, die für die wirtschaftliche Beschichtung von Bandmaterial unerläßlich sind. Es hat sich weiterhin gezeigt, daß die genannte Kombination der fluorhaltigen Haftvermittler-und Korrosionsschutzschicht mit der amorphen Kohlenstoffschicht eine etwa um den Faktor 10 geringere Streß-Spannung aufweist, wodurch die ansonsten eintretende Biegung des sehr dünnen Trägers weitgehend vermieden wird.

Eine besondere Rolle für die Funktion der erfindungsgemäßen Schichtkombination spielt hierbei die Haftvermittler-und Korrosionsschutzschicht aus einem Polymerisat aus der Gruppe der fluorierten Kohlenstoffe und Kohlenwasserstoffe. Da diese Verbindungen jedoch regelmäßig sehr fest gebundene Moleküle aufweisen, gelingt die Plasmapolymerisation dieser Verbindungen mit produktionstechnisch brauchbaren Niederschlagsraten wiederum nur im Mikrowellenplasma.

Weitere vorteilhafte Ausgestaltungen des Verfahrens ergeben sich aus den übrigen Verfahrensansprüchen.

Die Erfindung betrifft auch einen magnetischen Datenträger mit einer Oberflächenbeschichtung. Dieser ist gekennzeichnet durch

a) eine unmittelbar auf dem Datenträger befindliche Haftvermittler-Schicht aus einem Polymerisat aus der Gruppe der fluorierten Kohlenstoffe und Kohlenwasserstoffe mit einer Dicke zwischen 1 und 20 nm, und

b) eine auf die Haftvermittlerschicht aufgebrachte Schicht aus amorphem Kohlenstoff mit einer Dicke von 15-100 nm.

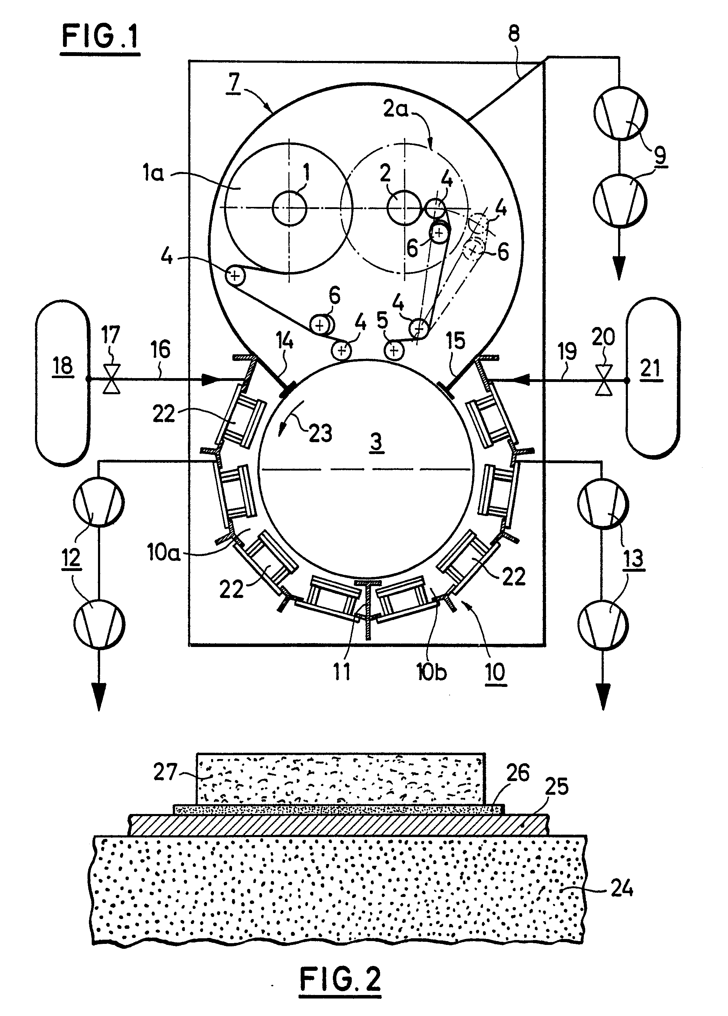

Ein Ausführungsbeispiel einer Vorrichtung zur Durchführung des erfindungsgemäßen Verfahrens und ein durch das Verfahren hergestellter magnetischer Datenträger werden nachfolgend anhand der Figuren 1 und 2 näher erläutert.

Es zeigen:

Figur 1 einen Vertikalschnitt durch eine stark schematisierte Vorrichtung zur Durchführung des erfindungsgemäßen Verfahrens und

Figur 2 einen Schnitt durch das Produkt, nämlich einen entsprechend beschichteten magnetischen Datenträger.

In Figur 1 ist eine Vorrichtung dargestellt, in der sich auf einer Vorratswelle 1 ein Wickel 1a aus dem zu beschichtenden Datenträger befindet, der über eine Temperiertrommel 3 zu einer Aufnahmewelle 2 umgewickelt wird, auf der sich ein Wickel 2a bis zu dem angedeuteten Maximaldurchmesser aufbauen kann. Zur Umlenkung und Führung des bandförmigen Datenträgers sind mehrere Umlenkwalzen 4 und 5 vorgesehen, sowie sogenannte Streckwalzen 6, durch die die Faltenbildung im Datenträger vermieden wird. Solche Walzen werden auch häufig als "Bananenwalzen" bezeichnet.

Vorratswelle 1, Aufnahmewelle 2 sowie Umlenkwalzen 4 und 5 und Streckwalzen 6 sind in einer ersten Vakuumkammer 7 angeordnet, aus der die unter anderem von dem Wickel 1a freigesetzten Gase über eine Saugleitung 8 und einen Pumpsatz 9 evakuiert werden.

Die Temperiertrommel 13 ist im wesentlichen konzentrisch von einer zweiten Vakuumkammer 10 umgeben, die auch als Reaktionskammer bezeichnet werden kann. Die Vakuumkammer 10 ist an ihrer tiefsten Stelle mit einer Trennwand 11 versehen, die bis in unmittelbare Nähe der Temperiertrommel 3 reicht, so daß beiderseits der Trennwand 11 zwei voneinander verschiedene Vakuumsysteme gebildet werden, die durch die Pumpsätze 12 bzw. 13 auf den für die beschriebenen Plasmapolymerisationsprozesse erforderlichen Betriebsvakua gehalten werden. Auch das Innenvolumen der ersten Vakuumkammer 7 ist über weitere Trennwände 14 und 15 gegenüber den beiden in der Vakuumkammer 10 gebildeten Vakuumsystemen bzw. Reaktionsräumen abgegrenzt, so daß sich differenzierte Vakua einstellen lassen.

In den links der Trennwand 11 liegenden Teil 10a der Vakuumkammer 10 mündet eine Leitung 16, die über ein Regelventil 17 zu einer Quelle 18 führt, in der sich eine flüchtige Fluor-Verbindung befindet. In den rechts von der Trennwand 11 befindlichen Teil 10b der Vakuumkammer 10 mündet eine Leitung 19, die über ein Regelventil 20 zu einer Quelle 21 für eine Kohlenstoff-Verbindung führt.

In der im wesentlichen zylindrischen Außenwand der Vakuumkammer 10 befinden sich insgesamt acht Fenster 22, und zwar jeweils vier beiderseits der Trennwand 11. Außerhalb der Vakuumkammer 10 sind vor diesen Fenstern 22 eine entsprechende Anzahl von Mikrowellen-Leiterstrukturen der weiter oben beschriebenen Art angeordnet, die hier jedoch der Einfachheit halber in der Zeichnung nicht dargestellt sind. Auf diese Weise läßt sich im Bereich eines jeden Fensters eine Plasmazone erzeugen, in der das aus den Quellen 18 bzw. 21 stammende Gas zu einer Schicht entsprechender Eigenschaften polymerisiert wird. Es ergibt sich aus der Bandführung in Richtung des Pfeils 23, daß das Substrat bzw. der Datenträger zuerst mit einer fluorhaltigen Polymerisatschicht als Haftvermittler und Korrosionsschutz und dann (jenseits der Trennwand 11) mit einer Schicht aus amorphem Kohlenstoff beschicht wird.

Ein derartiges Produkt ist in Figur 2 ausschnittsweise in stark vergrößertem Maßstab dargestellt. Auf einem Grundkörper 24, der durch eine thermoplastische Folie gebildet wird, befindet sich zunächst eine im Vakuum aufgedampfte Metallschicht 25 mit den geforderten magnetischen Eigenschaften zur Datenspeicherung. Grundkörper 24 und Metallschicht 25 bilden den eigentlichen Datenträger. Auf den Metallschicht 25 ist eine Haftvermittler-Schicht 26 aus der fluorhaltigen Polymerschicht aufgebracht, die zusammen mit der amorphen Kohlenstoffschicht 27 ein System von Schutzschichten bildet. Ggf. wird zwischen Grundkörper 24 und Metallschicht 25 noch eine weitere Haftvermittlerschicht vorgesehen.

Beispiel:

In einer Vorrichtung nach Figur 1 befand sich auf der Vorratswelle 1 ein Wickel 1a aus einer Polyesterfolie von 12 μm Dicke, die mit einer durch Schrägbedampfung hergestellten CoNi-Schicht von 100 nm Dicke versehen war. Nach dem Evakuieren der gesamten Vorrichtung wurde zunächst durch Zuführen von Stickstoff in die Vakuumkammer 10 ein Druck von $4 \times 10^{-2}$ mbar eingestellt. Anschliessend wurde im Bereich der Fenster 22 ein Mikrowellenplasma gezündet, und zwar durch Zuführung von Mikrowellenleistung zu den außerhalb der Vakuumkammer 10 liegenden und nicht gezeigten Mikrowellen-Leiterstrukturen, die vom Innenraum der Vakuumkammer 10 durch die besagten mikrowellendurchlässigen Quarzglasfenster getrennt waren. Die in die Mikrowellen-Leiterstruktur eingebrachte Leistung betrug 2,2 kW pro Meter laufender Länge der Struktur. Unmittelbar anschliessend wurde der Datenträger, nämlich die Polyesterfolie mit der CoNi-Schicht mit einer Geschwindigkeit von 18 m/min durch alle Plasmazonen hindurchgeführt. Anschliessend wurde der Datenträger zurückgewickelt.

In dem linken Teil 10a der Vakuumkammer 10 wurde nun durch Einlassen von HFP ein Druck von $4 \times 10^{-2}$ mbar eingestellt und wiederum eine Plasmazone mit einem Leistungseintrag in das Plasma von 1,8 kW pro Meter Länge der Struktur eingebracht. Gleichzeitig wurde im rechten Teil 10b der Vakuumkammer 10 durch Einlassen von $C_2H_2$ ein Druck von $4 \times 10^{-2}$ mbar eingestellt. Nach Zünden des Plasmas mit einem Leistungseintrag von gleichfalls 1,8 kW pro Meter laufender Strukturlänge wurde die Folie durch die beiden Kammerteile 10a und 10b mit einer Geschwindigkeit von 18 m/min hindurchgewickelt. Als Ergebnis hatte sich eine 10 nm dicke Schicht aus dem Polymerisat von HFP und darauf wiederum eine 30 nm dicke amorphe Kohlenstoffschicht abgeschieden.

Messungen an dem mit dem Schutzschichtsystem versehenen Datenträger ergaben, daß der Kontaktwinkel gegen Wasser auch nach längerer Lagerzeit bei 45 Grad lag, was sich jedoch im Hinblick auf die Korrosionsbeständigkeit des fertigen Datenträgers als ausgesprochener Vorteil erwies.

Bei einer Klimalagerung bei 65 °C und 95 % relativer Feuchte ergab sich nach 14 Tagen ein Remanenzverlust von nur 5 bis 6 % (zum Vergleich: Beim Verzicht auf eine Schutzschicht oder bei Verwendung einer Haftvermittler-Schicht, die aus Hexamethylendisiloxan gebildet wurde, betrug der Remanenzverlust unter vergleichbaren Klimabedingungen 12 %).

Bei der Untersuchung der Standbildzeit ergaben sich Standzeiten von deutlich über 30 Minuten (zum Vergleich: Beim Verzicht auf eine Schutzschicht ergab sich eine Standzeit beim Standbild-Versuch von nur knapp 10 Minuten bis zum Abfall der Bildqualität. Die Reduzierung des Signal-Rauschabstandes durch das Schutzschicht-System war nur geringfügig und hatte keinen merklichen Einfluß auf die Wiedergabequalität.)

**Ansprüche**

1. Verfahren zum Herstellen von Schutzschichten auf magnetischen Datenträgern durch Plasmapolymerisation in einem Frequenzbereich von 915 MHz bis 10 GHz und Abscheiden von Kohlenstoff enthaltenden Schichten aus zugeführten flüchtigen Kohlenwasserstoffen und Fluor-Kohlenstoff-Verbindungen, dadurch gekennzeichnet, daß man

a) zunächst eine Haftvermittler-und Korrosionschutzschicht aus einem Polymerisat aus der Gruppe der fluorierten Kohlenstoffe und Kohlenwasserstoffe mit einer Schichtdicke von 1 bis 20 nm aufbringt und

b) auf die Haftvermittlerschicht durch ein eine Biasspannung erzeugendes Plasma-Polymerisationsverfahren eine Schicht aus amorphem Kohlenstoff mit einer Schichtdicke von 15 bis 100 nm aufbringt.

2. Verfahren nach Anspruch 1, dadurch gekennzeichnet, daß man die Haftvermittlerschicht aus Hexafluorpropen (HFP) erzeugt.

3. Verfahren nach Anspruch 1, dadurch gekennzeichnet, daß man die amorphe Kohlenstoffschicht aus Acetylen erzeugt.

4. Verfahren nach Anspruch 1, dadurch gekennzeichnet, daß man für die Anregung des Plasmas eine außerhalb der Reaktionskammer liegende Mikrowellen-Leiterstruktur (Slow-wave-Struktur) verwendet und sowohl für die Herstellung der Haftvermittler-Schicht als auch der amorphen Kohlenstoffschicht die Mikrowellenleistung zwischen 400 und 3000 W pro Meter Länge der Leiterstruktur und einen Druck im Bereich zwischen 0,1 und 0,01 mbar wählt.

5. Verfahren nach Anspruch 1, dadurch gekennzeichnet, daß das Substrat durch Flächenberührung mit einem temperierten Körper auf einer Temperatur von mindestens 60°C gehalten wird.

6. Magnetischer Datenträger mit einer Oberflächenbeschichtung gekennzeichnet durch

a) eine unmittelbar auf dem Datenträger (24, 25) befindliche Haftvermittler-Schicht (26) aus einem Polymerisat aus der Gruppe der fluorierten Kohlenstoffe und Kohlenwasserstoffe mit einer Dicke zwischen 1 und 20 nm, und

b) eine auf die Haftvermittler-Schicht (26) aufgebrachte Schicht (27) aus amorphem Kohlenstoff mit einer Dicke zwischen 15 und 100 nm.

## FIG.1

## FIG.2